# FASCICULE DE BREVET EUROPEEN

(11) **EP 2 286 112 B1**
(45) Date de publication et mention de la délivrance du brevet: **23.05.2018**
(21) Numéro de dépôt: 08874603.7
(22) Date de dépôt: 11.06.2008
(51) Int. Cl.: F16G 3/16

(54) **OUTILLAGE PERFECTIONNE DESTINE A LA FIXATION D'AGRAFES DE JONCTION D'EXTRÉMITÉS DE BANDE TRANSPORTEUSE**
VERBESSERTE EINRICHTUNG ZUR BEFESTIGUNG VON DIE ENDEN EINES FÖRDERBANDS VERBINDENDEN KLEMMEN
IMPROVED EQUIPMENT FOR FASTENING CLIPS JOINING THE ENDS OF A CONVEYOR BELT

(43) Date de publication de la demande: 23.02.2011
(73) Titulaire: MLT Minet Lacing Technology, 42400 Saint-Chamond (FR)
(72) Inventeur: JAKOB, Horst, F-30360 Deaux (FR)
(74) Mandataire: Novagraaf Technologies
(86) Numéro de dépôt international: PCT/FR2008/000797
(87) Numéro de publication internationale: WO 2009/150307

(56) Documents cités:
- DE-A1- 4 140 743
- DE-A1- 4 336 998
- FR-A- 2 378 615
- FR-A- 2 722 266
- FR-A- 2 916 506
- US-A- 3 142 842
- US-A- 5 544 801

## Description

La présente invention a pour objet un perfectionnement destiné à un outillage de fixation d'agrafes de jonction d'extrémités de bande transporteuse.

On connaît bien dans l'art les agrafes de jonction de bande transporteuse du type comportant une plaque supérieure et une plaque inférieure réunies par des charnons, destinées à être fixées aux extrémités opposées d'une bande transporteuse pour former des séries de charnons débordant de l'extrémité respective de bande transporteuse et susceptibles de s'imbriquer les uns à côté des autres lorsque l'on rapproche lesdites extrémités opposées, les charnons d'une série d'agrafes ainsi fixée à une des extrémités opposées et les charnons de l'autre série d'agrafes fixées à l'autre des extrémités opposées étant ensuite réunis par une tige de liaison passant dans lesdits charnons imbriqués, à la manière du lacet d'une charnière. Ces agrafes sont le plus souvent fixées aux extrémités de la bande transporteuse considérée au moyen de crampons métalliques munis de pointes qui traversent successivement la plaque supérieure des agrafes, par des trous pratiqués à cet effet, puis la bande transporteuse, et enfin la plaque inférieure, par des trous également pratiqués à cet effet, pour être repliés et réaliser la fixation des agrafes. Différents modes de repli sont connus dans l'art, y compris des modes dans lesquels les pointes des crampons sont repliées non pas sous la face inférieure de l'agrafe mais sous des pontets pratiqués dans la face supérieure de la plaque inférieure de l'agrafe. Pour la mise en place de ces crampons de fixation, on se servait, et on se sert encore, de marteaux manuels classiques qui sont utilisés pour frapper le dos des crampons et pour refermer les agrafes contre les extrémités de bande transporteuse afin de plaquer les plaques supérieure et inférieure contre les faces supérieure et inférieure de la bande transporteuse, en même temps que les crampons sont enfoncés et repliés.

Ces opérations manuelles exigent une main d'oeuvre très qualifiée et cependant la pose ainsi réalisée est loin d'être parfaite, en raison du fait que la force des coups de marteau et le positionnement de ces coups de marteau ne sont pas commandés avec précision.

Un brevet allemand DE 41 40 743 C2 a proposé un outillage permettant de caler l'extrémité de bande transporteuse, portant des agrafes engagées à cheval sur son bord, sur une partie inférieure de l'outillage servant d'enclume et de frapper au marteau un poinçon logé dans une partie supérieure de l'outillage, elle-même positionnée et guidée par des doigts engagés dans des trous de la partie inférieure et dans des trous de la partie supérieure de l'outillage. Le poinçon ainsi parfaitement positionné et guidé pouvait enfoncer les crampons pour fixer l'agrafe sur l'extrémité de la bande transporteuse en étant battu au marteau.

On a proposé également des dispositifs pneumatiques, ou électriques, pour guider, positionner et frapper les crampons lors de leur pose, ces dispositifs étant gouvernés de manière à assurer une force de frappe commandée à l'avance, une fréquence des coups également commandée à l'avance. On consultera en particulier la publication (Offenlegungsschrift) de demande de brevet allemand DE 43 36 998 A1 qui se situe dans la ligne de développement du brevet DE 41 40 743 C2.

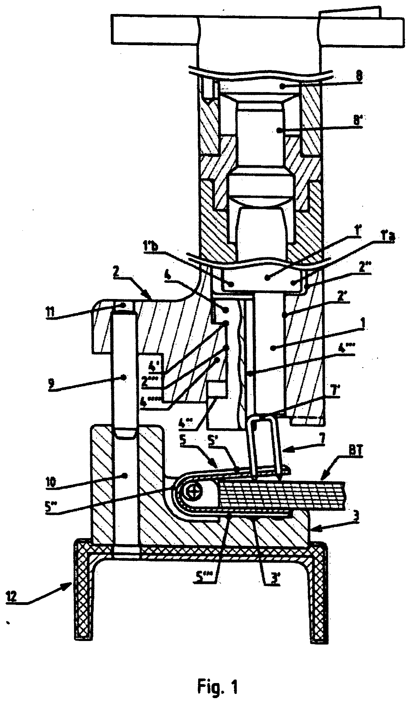

Le dispositif de la publication DE 43 36 998 A1 est représenté en détail sur la figure 1 de cette publication.

Cet outillage de l'art antérieur constitue l'art antérieur le plus proche de la présente invention. Il comporte une partie inférieure 3 constituant une enclume solidaire d'une embase 28. Cette enclume est aménagée pour recevoir une 1 des agrafes d'une série d'agrafes enfilées à cheval sur une extrémité 2 de bande transporteuse, les charnons 11 des agrafes étant alignés grâce à une tige d'alignement 15 passant dans les charnons et dans des trous d'alignement pratiqués dans des bossages 12 de la partie inférieure 3.

Sur le côté gauche (sur la figure) de la partie inférieure 3 de l'outillage sont prévus plusieurs trous verticaux de positionnement et de guidage (dont un seul est visible sur la figure). Ces trous de positionnement et de guidage servent à recevoir des doigts de guidage 17 (dont un seul est visible sur la figure) qui sont engagés dans des trous de positionnement et de guidage pratiqués dans la partie supérieure 4. On comprend que les deux parties sont ainsi en parfait alignement et que la partie supérieure 4 peut coulisser vers le haut et vers le bas, en étant guidée par les doigts 9.

Des crampons 7 comportant un dos et deux pointes sont engagés avec bridage dans des trous pratiqués dans la plaque supérieure de l'agrafe.

La partie supérieure 4 comporte un canal de guidage vertical en alignement vertical avec l'enclume de la partie inférieure 3. Ce canal de guidage comporte un poinçon 6 doté d'une tête. Ce poinçon 6 peut coulisser vers le haut et vers le bas dans ce canal de guidage vertical. Sa course est limitée vers le bas par la tête qui se déplace dans une partie élargie du canal de guidage du poinçon.

Un marteau pneumatique, ou électrique, frappe, par l'intermédiaire d'un coulisseau de frappe 25 éventuellement omis, la tête du poinçon 6, ce qui permet l'enfoncement du crampon 7 et la fixation de l'agrafe dont la plaque supérieure se rabat contre la face supérieure de la bande transporteuse du fait du bridage initial des crampons dans les trous de la plaque supérieure.

Cependant aussi bien les résultats obtenus avec l'outillage selon le brevet DE 41 40 998 A1 que ceux obtenus avec l'outillage selon la publication DE 43 36 998 A1, n'étaient pas satisfaisants. En effet la partie de la plaque supérieure comprise entre les chamons et le crampon n'était pas correctement aplatie contre la face supérieure de la bande transporteuse, du fait qu'elle n'avait pas été battue mais simplement entraînée. Par ailleurs le dispositif de la publication US 3,142,842 A décrit l'utilisation d'un second poinçon. Plus précisément, ce document divulgue un premier poinçon 7 et un deuxième poinçon 9, le premier poinçon 7 comprenant une saillie vers le bas 20 apte à entrer dans la fente 16 pour venir battre le crampon et un épaulement apte à venir battre les face supérieures du deuxième poinçon 9 de chaque côté de la fente. Il est également décrit que le deuxième poinçon 9 ne peut pas coulisser librement, en effet, lorsque le premier poinçon 7 est forcé vers le bas le deuxième poinçon 9 n'est plus supporté par des liens 40 et peut ainsi être pressé dans l'espace 10 contre la surface supérieure de l'agrafe 5. C'est pourquoi la présente invention a été faite en vue d'obtenir des agrafes parfaitement positionnées et fixées sans aucun jeu. L'existence de jeux est très préjudiciable à la durabilité des agrafes qui ont tendance à s'arracher du fait des fortes tractions auxquelles elles sont soumises. De plus la présence de reliefs donne prise aux râcleurs utilisés pour débarrasser la bande transporteuse de débris de matériaux. Dans ce cas également les agrafes peuvent être arrachées.

La solution de ces problèmes est obtenue en ajoutant, dans un outillage du type présenté dans la publication (Offenlegungschrift) de demande de brevet allemand N° DE 43 36 998 A1, en plus du poinçon agissant comme décrit plus haut sur les crampons, un deuxième poinçon ou poinçon complémentaire qui a un double rôle, c'est-à-dire un rôle de guidage du crampon et un rôle de frappe sur la plaque supérieure de l'agrafe, ce rôle de frappe étant obtenu au cours du cycle de fonctionnement, par un couplage de la frappe du poinçon principal et de celle du poinçon complémentaire, cette frappe étant effectuée soit au marteau comme dans le brevet antérieur DE 41 40 743 C2, soit au moyen d'un dispositif pneumatique ou électrique comme dans la publication DE 43 36 998 A1 citée plus haut. On verra plus loin deux moyens utilisés pour obtenir ledit couplage de la frappe des deux poinçons.

Ce poinçon complémentaire est monté libre dans un canal vertical ménagé à cet effet le long du poinçon principal. Sa course potentielle est limitée par une proéminence ménagée dans ce canal vertical à partir de la paroi du canal située à l'opposé du poinçon principal. Le poinçon complémentaire comporte lui-même deux épaulements, un épaulement supérieur et un épaulement inférieur, disposés de part et d'autre de la proéminence, c'est-à-dire que la distance séparant les deux épaulements du poinçon complémentaire est supérieure à la dimension de la proéminence dans le sens vertical. On comprendra que le débattement potentiel du poinçon complémentaire dans le sens vertical est mesuré par la différence entre cette distance et ladite dimension de la proéminence. On comprendra également que le poinçon complémentaire se trouve ainsi prisonnier dans son canal, sa seule liberté de mouvement étant un coulissement dans la direction verticale.

On comprendra que le poinçon complémentaire peut en fin de course du poinçon principal être frappé par un épaulement de la tête du poinçon principal qui frappe le sommet du poinçon complémentaire. Dans le cas où la tête du poinçon principal ne comporte pas d'épaulement du côté du poinçon complémentaire, celui-ci peut être frappé soit directement, en même temps que le poinçon principal, soit par un coulisseau intermédiaire interposé entre les deux poinçons et une tête de frappe d'un marteau pneumatique ou électrique. Une frappe au marteau manuel est également pensable, en employant un coulisseau de frappe sortant de la partie supérieure qui, lorsqu'il est frappé par le marteau, frappe le poinçon principal, puis en fin de course de celui-ci le poinçon complémentaire. On peut également prolonger le poinçon principal tout en dotant sa tête d'un épaulement situé au-dessus du sommet du poinçon complémentaire, comme expliqué plus haut, de telle sorte que ce prolongement, sortant de la partie supérieure de l'outillage, peut être frappé au marteau manuel.

Les résultats de ces divers modes de frappe sont identiques en ce qui concerne la frappe de la partie de la face supérieure de la plaque supérieure comprise entre le charnon et le crampon, le meilleur résultat étant cependant obtenu avec un marteau pneumatique ou électromécanique dont la force de frappe et la fréquence des frappes peuvent être réglées comme enseigné dans la publication DE 43 36 998 A1.

L'invention va maintenant être décrite plus en détail en rapport avec le dessin qui représente la forme de réalisation préférée de l'invention.
La figure 1 est une vue en coupe partielle d'un outillage selon l'invention, selon un plan vertical parallèle au plan longitudinal médian de l'extrémité de bande transporteuse engagée dans l'outillage en vue d'y être munie d'agrafes fixées au moyen de crampons, et ce, au premier stade de la fixation de l'agrafe.

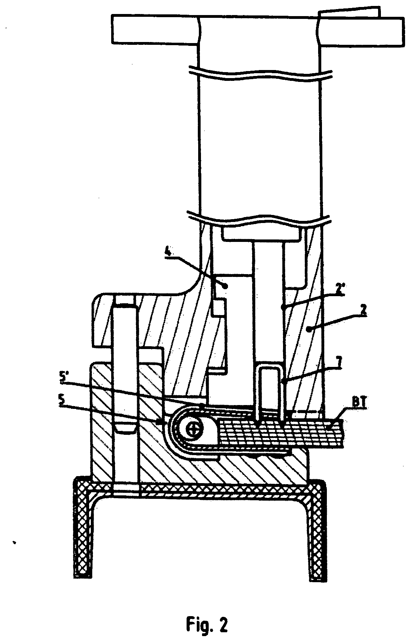

La figure 2 est une vue en coupe partielle du même dispositif selon le même plan que celui de la coupe de la figure 1, au deuxième stade de la fixation de l'agrafe, l'agrafe étant repliée contre la face supérieure de l'extrémité de la bande transporteuse, le crampon n'étant pas encore enfoncé.

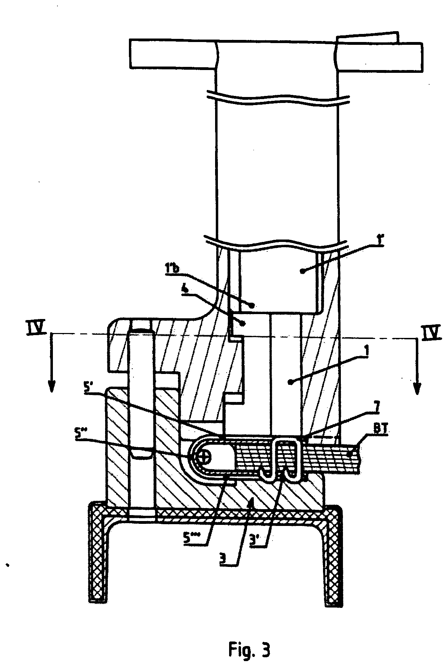

La figure 3 est une vue en coupe partielle selon le même plan que celui des coupes des figures 1 et 2, le crampon étant enfoncé, ses pointes étant repliées et la face supérieure de l'agrafe étant parfaitement appliquée contre la face supérieure de l'extrémité de la bande transporteuse sans qu'il subsiste une proéminence quelconque entre le charnon et le crampon.

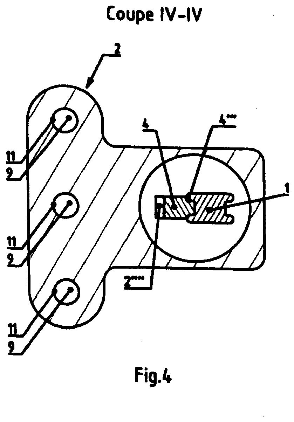

La figure 4 est une coupe de la partie supérieure 2 selon la ligne IV-IV de la figure 3.

La figure 1 représente en coupe partielle une des formes de réalisation de l'invention. L'outillage représenté au premier stade de l'opération de fixation de l'agrafe 5 sur l'extrémité d'une bande transporteuse BT au moyen d'un crampon 7, comprend une partie inférieure fixe 3 placée sur une embase 12 et une partie supérieure mobile verticalement 2. Les deux parties sont reliées par des doigts 9 (dont un seul est visible sur la figure). Ces doigts sont au moins au nombre de deux, de préférence de trois, et ils sont enfilés dans des trous de calage 10 et 11 respectivement ménagés dans la partie inférieure 3 et dans la partie supérieure 2. Les trous de calage 10 et 11 sont alignés perpendiculairement au plan de la figure (c'est-à-dire qu'une seule paire de trous et un seul doigt de calage apparaissent sur la figure, les autres se situant derrière) et parallèlement à l'alignement prévu dans l'enclume 3' de la partie inférieure en vue de recevoir le bord de l'extrémité de bande transporteuse portant des agrafes 5 à fixer.

Sur le côté droit de la figure, la partie supérieure 2 de l'outillage comporte un canal de guidage vertical 2' destiné à guider un poinçon principal 1. Un autre canal vertical de guidage 2'" est ménagé dans la partie supérieure 2 de l'outillage. Ce canal permet le coulissement d'un poinçon complémentaire 4 et il est juxtaposé verticalement au canal de guidage 2' du poinçon principal, à gauche (sur la figure) de ce canal de guidage 2'. On remarque que le poinçon complémentaire 4 comporte un épaulement haut 4" et un épaulement bas 4'. Ces épaulements ont pour but de limiter les déplacements du poinçon complémentaire 4 vers le haut et vers le bas en coopération avec une proéminence 2"" de la partie inférieure 2 de l'outillage qui pénètre dans le canal de guidage du poinçon complémentaire. Cette proéminence 4"", qui a une forme complémentaire de celle de l'espace laissé libre entre les deux épaulements 4' et 4" à l'exception du fait que sa hauteur est plus faible, permet un débattement du poinçon complémentaire 4 dans le sens vertical, vers le haut et vers le bas, tout en empêchant le poinçon complémentaire 4 de glisser hors de la partie supérieure 2 de l'outillage.

On remarque également, sur le côté droit (sur la figure) du poinçon complémentaire, une gorge de guidage verticale 4'" disposée sur le côté du poinçon complémentaire 4 qui jouxte le canal de guidage 2' du poinçon principal 1. Cette gorge est représentée sur la figure en arraché. On remarque sur la figure 1 que le dos 7' du crampon et l'amorce d'une de ses branches est, à ce stade initial, légèrement engagé dans cette gorge 4"".

Ce poinçon complémentaire 4 constitue la nouveauté apportée par l'invention. Dans le haut de la partie supérieure 2 de l'outillage est installé un marteau pneumatique dont la tête de frappe 8 peut entrer en contact avec le poinçon principal 1 soit directement soit indirectement par l'intermédiaire d'un coulisseau de frappe 8'. Le poinçon principal 1 comporte en partie haute une tête 1' consistant en un élargissement qui peut coulisser dans une partie élargie 2" du canal de guidage 2'. Dans la version représentée sur la figure 1, la tête 1' déborde sur le côté droit en formant un épaulement 1'a qui peut s'appuyer en fin de course du poinçon 1 contre le fond de la partie élargie 2" du canal de guidage 2. La fonction de cet épaulement est de permettre de limiter la course du poinçon principal 1 vers le bas. Accessoirement elle empêche le poinçon principal 1 de glisser vers le bas hors de l'outillage. Sur le côté gauche (sur la figure 1) la tête 1' est élargie en formant un épaulement 1'b situé au-dessus du poinçon complémentaire. Dans une autre version qui n'est pas celle représentée sur la figure, la tête 1' n'est pas élargie au-dessus du poinçon complémentaire 4 qui peut de ce fait venir affleurer le niveau de sommet de la tête 1' du poinçon principal 1, sa course étant autorisée jusqu'à ce niveau. On verra plus loin avec les explications sur le fonctionnement des poinçons 1' et 4 comment cette version permet elle aussi d'effectuer l'enfoncement du crampon et le resserrement parfait de la plaque supérieure de l'agrafe contre la face supérieure de la bande transporteuse. Au stade initial représenté sur la figure 1 on remarque l'extrémité BT de la bande transporteuse, portant une agrafe 5 engagée à cheval sur le bord de ladite extrémité, la plaque inférieure 5'" de l'agrafe étant calée dans le creux de l'enclume 3 et la plaque supérieure 5' étant encore oblique pour pouvoir enfiler l'agrafe 5 portant un crampon 7 engagé avec bridage dans des trous pratiqués dans la plaque supérieure 5', ses pointes dépassant quelque peu sous la face inférieure de la plaque supérieure 5'. De ce fait le dos 7' du crampon est à peine engagé d'une part sous le poinçon principal 1, en contact avec celui-ci et d'autre part dans une gorge verticale 4"' pratiquée sur le côté droit (sur la figure) du poinçon complémentaire 4 qui se trouve, lui en position basse, retenu par l'épaulement 4'.

L'outillage se trouve ainsi prêt à opérer pour fixer l'agrafe au moyen du crampon sur une extrémité de bande transporteuse. Il faut remarquer que, dans un but de simplification de la description, on a employé le singulier pour l'agrafe et pour le crampon, bien entendu l'agrafe considérée n'est qu'une des agrafes d'une série d'agrafes engagées sur le bord d'une extrémité de bande transporteuse, et il est possible d'utiliser plusieurs crampons sur une même agrafe.

On retrouve sur la figure 2 les mêmes éléments que sur la figure 1. Le marteau pneumatique ayant été mis en fonctionnement le crampon 7 a glissé dans le canal 2' de la partie supérieure 2 qui elle-même est descendue sous l'effet de son propre poids en accompagnant la descente de la plaque supérieure 5' de l'agrafe 5 qui est venue en contact de la face supérieure de la bande transporteuse BT dans sa partie qui porte le crampon 7, le crampon 7 ayant entraîné cette face supérieure 5' du fait du bridage dans les trous de la plaque supérieure 5. Le crampon 7 s'est légèrement enfoncé dans la matière de la bande transporteuse. A ce stade le poinçon complémentaire 4 n'a pas encore un rôle actif, il se contente de suivre le mouvement en restant contre la face supérieure de la plaque supérieure 5' de l'agrafe 5 sans être entraîné positivement, le crampon étant guidé dans la gorge de guidage 4"'.

La figure 3 montre l'aboutissement des opérations de fixation. Le crampon 7, sous l'effet des battements du poinçon principal 1, a été complètement enfoncé dans l'épaisseur de la bande transporteuse BT. Etant bien guidé il a rencontré les trous de la plaque inférieure 5'" de l'agrafe et ses pointes se sont recourbées sur les creux de l'enclume 3. Simultanément à la dernière partie de la course du poinçon principal 1, l'épaulement de gauche 1'b (sur le dessin), formé par la tête 1' du poinçon principal, a rencontré le sommet du poinçon complémentaire 4 qui a commencé à être battu sous l'effet de cet épaulement 1'b du poinçon principal et il a lui-même battu, de ce fait, la partie de la face supérieure de la plaque supérieure 5' de l'agrafe 5 comprise entre le charnon 5" et le crampon 7 en la plaquant parfaitement. Ces battages combinés du crampon 7 et de l'agrafe 5 entraînent un serrage parfait de l'agrafe.

La figure 4 est une coupe horizontale selon la ligne IV-IV de la figure 3 montrant, en plan, tous les éléments cités précédemment, portant les mêmes références que dans les autres figures, de la partie supérieure 2 de l'outillage dans une zone moyenne de hauteur. On y remarque 3 trous 11, 3 doigts 9 de positionnement de guidage (dont un seul apparaissait sur les figures 1, 2 et 3). On observe également vu en coupe, le poinçon complémentaire 4, le poinçon principal 1 également en coupe, et la proéminence 2"" qui limite le débattement vers le haut et vers le bas du poinçon complémentaire 4, ainsi que la gorge de guidage 4"' du poinçon complémentaire 4.

Il faut remarquer que la description a été faite avec comme élément frappeur un marteau pneumatique. Cependant, il est clair qu'un outillage utilisant un poinçon complémentaire selon l'invention peut être utilisé avec n'importe quel élément frappeur, y compris un marteau manuel, un marteau électrique, un marteau hydraulique.

Dans la version dans laquelle la tête de poinçon 1 n'est élargie que sur le côté droit (sur la figure), la tête de frappe du marteau pneumatique peut frapper directement les deux poinçons 1 et 4 dès que le crampon 7 a été enfoncé suffisamment pour que le sommet du poinçon complémentaire affleure le sommet de la tête du poinçon principal.

Ainsi l'invention présente-t-elle un outillage très efficace, léger et sans complications mécaniques, électriques ou électroniques, qui répond au mieux aux exigences posées au début.

## Revendications

1. Outillage destiné à la fixation d'agrafes de jonction d'extrémités de bande transporteuse du type comportant une plaque supérieure (5') et une plaque inférieure (5"') reliées par des charnons (5"), susceptibles d'être mises en place sur les extrémités d'une bande transporteuse (BT), en deux séries respectives, les charnons (5") des deux séries respectivement opposées pouvant être reliés, après avoir été mutuellement imbriqués, par une tige de liaison et d'articulation, à la manière d'une charnière, ledit outillage comportant une partie supérieure mobile (2) et une partie inférieure fixe (3), positionnées et centrées l'une par rapport à l'autre par des éléments de positionnement et de centrage, la partie supérieure (2) pouvant coulisser verticalement en s'approchant ou en s'éloignant de la partie inférieure (3), la partie inférieure (3) comportant une enclume (3') et des moyens de calage destinés à la plaque inférieure (5"') d'une agrafe (5) présentée entre la partie supérieure (2) et la partie inférieure (3) de l'outillage, la partie supérieure (2) de l'outillage comportant un canal vertical (2') susceptible de recevoir un poinçon principal (1) sensiblement centré au-dessus de l'enclume (3') et pouvant être frappé avec battage, au moyen d'un marteau manuel, ou d'un dispositif du type marteau pneumatique, électromécanique, ou hydraulique, monté dans la partie supérieure (2) de l'outillage, pour enfoncer des crampons (7) engagés de préférence avec bridage dans des trous pratiqués dans la plaque supérieure (5') d'une agrafe de jonction (5) disposée à cheval sur le bord d'une extrémité de bande transporteuse (BT) placée entre la partie supérieure (2) de l'outillage et la partie inférieure (3) de l'outillage, puis dans la matière de l'extrémité de la bande transporteuse, ses pointes étant ensuite repliées soit sous la plaque inférieure (5"') de l'agrafe (5) en rencontrant des creux de forme adéquate pratiqués dans l'enclume (3') de la partie inférieure (3) de l'outillage soit sous un pontet, ou des pontets, pratiqué, ou pratiqués, dans la plaque inférieure (5"') de l'agrafe (5), la face supérieure de la plaque inférieure (5"') de l'agrafe jouant le rôle d'une enclume, la face inférieure de la plaque inférieure (5"') de l'agrafe étant en appui sur l'enclume de la partie inférieure de l'outillage qui dans ce dernier cas est lisse,
la partie supérieure (2) de l'outillage comportant un deuxième canal vertical (2"') dans lequel est monté un poinçon complémentaire (4) de manière à pouvoir coulisser dans ce canal (2"') parallèlement au poinçon principal (1) en étant juxtaposé à ce poinçon principal (1),
**caractérisé en ce que** le poinçon complémentaire (4) est disposé de telle sorte que son extrémité inférieure soit située de façon précise au-dessus de la partie de la plaque supérieure (5') de l'agrafe (5) située entre les charnons (5") et la branche du crampon (7) la plus proche des charnons (5"), l'agencement des deux poinçons étant tel que le poinçon complémentaire (4) ne commence à être battu, en même temps que le poinçon principal (1) continue à l'être, qu'après que le poinçon principal (1) a enfoncé le crampon et appliqué contre la face supérieure de l'extrémité de la bande transporteuse (BT) la partie de la plaque supérieure (5') de l'agrafe (5) située sous le crampon (7).

2. Outillage selon la revendication 1, **caractérisé en ce que** le poinçon principal (1) comporte une tête (1') qui forme une partie élargie (1'a) du côté opposé à celui où est situé le poinçon complémentaire (4), ladite partie élargie (1'a) pouvant se déplacer dans une partie élargie (2") du canal (2') lors du déplacement du poinçon principal (1).

3. Outillage selon la revendication 2, **caractérisé en ce que** le poinçon principal (1) comporte une tête (1') qui forme une partie élargie (1'b) du côté où est situé le poinçon complémentaire (4), ladite partie élargie (1'b) se trouvant au-dessus du sommet du poinçon complémentaire (4), à une distance qui varie selon les déplacements respectifs des deux poinçons (1) et (4) dans leurs canaux respectifs (2') et (2"').

4. Outillage selon la revendication 2 ou 3, **caractérisé en ce que** le poinçon complémentaire (4) comporte un épaulement haut (4') et un épaulement bas (4") sur son côté disposé à l'opposé du poinçon principal (1) et qu'une proéminence (2"") fait saillie dans le canal vertical de guidage (2"') du poinçon complémentaire (4), dans l'espace compris entre les deux épaulements (4') et (4") du poinçon complémentaire (4), la dimension de ladite proéminence (2""), dans le sens vertical, étant inférieure à celle dudit espace, également dans le sens vertical, dudit espace, de telle manière que l'épaulement haut (4') est en appui sur la proéminence (2"') lorsque le poinçon complémentaire (4) est en position basse, position dans laquelle une gorge verticale de guidage (4"') ménagée dans le poinçon complémentaire (4), dans le côté de celui-ci qui est orienté vers le poinçon principal (1), peut recevoir la partie supérieure d'un crampon (7) engagé avec bridage dans les trous de la plaque supérieure (5') d'une agrafe (5) présentée dans l'outillage, à cheval sur le bord d'une extrémité de bande transporteuse (BT), sa plaque supérieure (5') étant, à ce stade, oblique par rapport à la face supérieure de la bande transporteuse (BT).

5. Outillage selon la revendication 3, **caractérisé en ce qu'**un marteau pneumatique, électromécanique, ou hydraulique, est monté dans la partie supérieure (2) de l'outillage, de manière à ce que sa tête de frappe (8) puisse frapper, en le battant, le poinçon principal (1), soit directement, soit par l'intermédiaire d'un coulisseau de frappe (8') monté entre la tête de frappe (8) et le poinçon principal (1).

6. Outillage selon la revendication 2, **caractérisé en ce qu'**un marteau pneumatique, électromécanique ou hydraulique, est monté dans la partie supérieure (2) de l'outillage de manière à ce que sa tête de frappe (8) puisse frapper, en les battant, le poinçon principal (1) et le poinçon complémentaire (4), soit directement, soit par l'intermédiaire d'un coulisseau de frappe (8') monté entre la tête de frappe (8) et les poinçons (1) et (4).

7. Outillage selon la revendication 3, **caractérisé en ce que** le poinçon principal (1) comporte un prolongement vers le haut, ce prolongement dépassant au-dessus du sommet de la partie supérieure (2) de l'outillage, ce prolongement étant susceptible d'être battu au moyen d'un marteau manuel, ou d'un marteau pneumatique, électromécanique ou hydraulique.

8. Outillage selon la revendication 7, **caractérisé en ce que** le prolongement ne
forme pas une seule pièce avec le poinçon principal (1) mais est constitué d'un coulisseau de frappe qui est en contact, à une de ses extrémités, avec le poinçon principal (1) et son autre extrémité dépassant au-dessus du sommet de la partie supérieure (2) de l'outillage, ce coulisseau de frappe pouvant être battu au moyen d'un marteau manuel, ou d'un marteau pneumatique, électromécanique ou hydraulique.

9. Outillage selon la revendication 2, **caractérisé en ce que** le poinçon principal (1) comporte un prolongement vers le haut, ce prolongement dépassant au-dessus du sommet de la partie supérieure (2) de l'outillage, ce prolongement étant susceptible d'être frappé au moyen d'un marteau manuel, ou d'un marteau pneumatique, électromécanique ou hydraulique, le poinçon complémentaire (4) comportant également un prolongement dépassant au-dessus du sommet de la partie supérieure (2) de l'outillage également susceptible d'être frappé, en même temps que le poinçon principal (1) après que celui-ci a enfoncé le crampon (7) et que de ce fait les sommets des deux poinçons (1) et (4) se trouvent alors au même niveau et étant de ce fait susceptibles d'être frappés ensemble par un marteau manuel, ou d'un marteau pneumatique, électromécanique ou hydraulique.

10. Outillage selon la revendication 9, **caractérisé en ce que** le prolongement du poinçon principal dépassant au-dessus du sommet de la partie supérieure (2) de l'outillage ne forme pas une seule pièce avec le poinçon principal (1) mais consiste en un coulisseau, ledit coulisseau étant destiné à frapper le poinçon principal (1) puis simultanément le poinçon principal (1) et le poinçon complémentaire (4) lorsqu'il est lui-même frappé au moyen d'un marteau manuel, ou d'un marteau pneumatique, électromécanique ou hydraulique à son extrémité qui dépasse de la partie supérieure (2) de l'outillage.

## Patentansprüche

1. Einrichtung, die ausgelegt ist, Klemmen der Enden eines Förderbands zu befestigen vom Typ umfassend eine obere Platte (5') und eine untere Platte (5"') , die durch Scharnierteile (5"), die auf den Enden eines Förderbands (BT) angebracht werden können, in zwei entsprechenden Reihen verbunden sind, wobei die Scharnierteile (5") der zwei jeweils entgegengesetzten Reihen, nachdem sie miteinander durch einen Verbindungs-und Gelenkstift auf die Art eines Scharniers verzahnt wurden, verbunden werden können, wobei die Einrichtung einen beweglichen oberen Teil (2) und einen befestigten unteren Teil (3) umfasst, die in Bezug aufeinander durch Positionierungs- und Zentrierungselemente positioniert und zentriert sind, wobei der obere Teil (2) vertikal gleiten kann, wenn er sich dem unteren Teil (3) annähert oder von diesem entfernt, wobei der untere Teil (3) einen Amboss (3') und Klemmmittel umfasst, die für die untere Platte (5'") einer Klemme (5) ausgelegt sind, der zwischen dem oberen Teil (2) und dem unteren Teil (3) des Einrichtung angeordnet ist, wobei der obere Teil (2) der Einrichtung einen vertikalen Kanal (2') umfasst, der einen Hauptdorn (1) aufnehmen kann, der im Wesentlichen über dem Amboss (3') zentriert ist und der mit einem Schlag, mit Hilfe eines Handhammers oder einer Vorrichtung vom Typ pneumatischer, elektromechanischer oder hydraulischer Hammer, der im oberen Teil (2) der Einrichtung montiert ist, eingeschlagen werden kann, um Klammern (7) einzudrücken, die vorzugsweise durch Aufspannen in Löcher eingreifen die in der oberen Platte (5') einer Verbindungsklemme (5) durchgeführt sind, die auf beiden Seiten auf dem Rand eines Endes des Transportbands (BT) positioniert ist, das zwischen dem oberen Teil (2) der Einrichtung und dem unteren Teil (3) der Einrichtung platziert ist, dann im Material des Endes des Transportbands, wobei ihre Spitzen anschließend, entweder unter der unteren Platte (5"') der Klemme (5) umgeschlagen werden, indem sie Hohlräume antreffen, die auf angemessene Form im Amboss (3') des unteren Teils (3) der Einrichtung durchgeführt sind, oder unter einem Bügel oder Bügeln, die in der unteren Platte (5"') der Klemme (5) durchgeführt sind, wobei die obere Seite der unteren Platte (5'") der Klemme die Rolle eines Ambosses spielt, wobei die untere Seite der unteren Platte (5"') der Klemme auf dem Amboss des unteren Teils der Einrichtung aufliegt, der in diesem Letzteren Fall glatt ist,
wobei der obere Teil (2) der Einrichtung einen zweiten vertikalen Kanal (2'") umfasst, in dem ein zusätzlicher Dorn (4) montiert ist, um in diesem Kanal (2'") parallel zum Hauptdorn (1) gleiten zu können, indem er neben diesen Hauptdorn (1) gestellt ist,
**dadurch gekennzeichnet, dass** der zusätzliche Dorn (4) derart positioniert ist, dass sein unteres Ende auf präzise Weise über dem Teil der oberen Platte (5') der Klemme (5) liegt, der zwischen den Scharnierteilen (5") und dem Zweig der Klammer (7) liegt, der am nächsten an den Scharnierteilen (5") ist, wobei die Anordnung der zwei Dorne derart ist, dass der zusätzliche Dorn (4) erst beginnt, geschlagen zu werden, gleichzeitig, wie dies beim Hauptdorn (1) weiterhin der Fall ist, nachdem der Hauptdorn (1) die Klammer eingedrückt und gegen die obere Seite des Endes des Transportbands (BT) angewendet wurde, wobei die obere Platte (5') der Klemme (5) unter der Klammer (7) liegt.

2. Einrichtung nach Anspruch 1, **dadurch gekennzeichnet, dass** der Hauptdorn (1) einen Kopf (1') umfasst, der einen verlängerten Teil (1'a) der Seite bildet, die derjenigen gegenüber liegt, an der der zusätzliche Dorn (4) liegt, wobei sich der verlängerte Teil (1'a) in einem verlängerten Teil (2") des Kanals (2') verschieben kann, wenn sich der Hauptdorn (1) verschiebt.

3. Einrichtung nach Anspruch 2, **dadurch gekennzeichnet, dass** der Hauptdorn (1) einen Kopf (1') umfasst, der einen verlängerten Teil (1'b) der Seite bildet, an der der zusätzliche Dorn (4) liegt, wobei sich der verlängerte Teil (1'b) über dem Scheitel des zusätzlichen Dorns (4) in einem Abstand befindet, der je nach den jeweiligen Verschiebungen der zwei Dorne (1) und (4) in ihren entsprechenden Kanälen (2') und (2") variiert.

4. Einrichtung nach Anspruch 2 oder 3, **dadurch gekennzeichnet, dass** der zusätzliche Dorn (4) einen oberen Absatz (4') und einen unteren Absatz (4") auf seiner Seite umfasst, die sich gegenüber dem Hauptdorn (1) positioniert ist, und dass ein Vorsprung (2"") aus dem vertikalen Führungskanal (2'") des zusätzlichen Dorns (4) in den Raum hervorsteht, der zwischen den zwei Absätzen (4') und (4") des zusätzlichen Dorns (4) enthalten ist, wobei die Abmessung des Vorsprungs (2"") in der vertikalen Richtung geringer als diejenige des Raums, ebenfalls in der vertikalen Richtung des Raums, ist, so dass der obere Absatz (4') auf dem Vorsprung (2'") aufliegt, wenn sich der zusätzliche Dorn (4) in der unteren Position befindet, einer Position in der eine vertikale Führungsauskehlung 4"'), die im zusätzlichen Dorn (4) ausgeführt ist, in der Seite dessen, der hin zum Hauptdorn (1) ausgerichtet ist, den oberen Teil der Klammer (7) aufnehmen kann, der durch Aufspannen in die Löcher der oberen Platte (5') einer Klemme (5) eingreift, die in der Einrichtung auf beiden Seiten auf dem Rand eines Endes des Transportbands (BT) vorhanden ist, wobei die obere Platte (5') in diesem Zustand schräg mit Bezug auf die obere Seite des Transportbands (BT) ist.

5. Einrichtung nach Anspruch 3, **dadurch gekennzeichnet, dass** ein pneumatischer, elektromechanischer oder hydraulischer Hammer im oberen Teil (2) der Einrichtung montiert ist, so dass sein Schlagkopf (8) durch Schlagen den Hauptdorn (1) entweder direkt oder mit Hilfe eines Schlagschiebers (8'), der zwischen dem Schlagkopf (8) und dem Hauptdorn (1) montiert ist, schlagen kann.

6. Einrichtung nach Anspruch 2, **dadurch gekennzeichnet, dass** ein pneumatischer, elektromechanischer oder hydraulischer Hammer im oberen Teil (2) der Einrichtung montiert ist, so dass sein Schlagkopf (8) durch Schlagen den Hauptdorn (1) und den zusätzlichen Dorn (4) entweder direkt oder mit Hilfe eines Schlagschiebers (8'), der zwischen dem Schlagkopf (8) und den Dornen (1) und (4) montiert ist, schlagen kann.

7. Einrichtung nach Anspruch 3, **dadurch gekennzeichnet, dass** der Hauptdorn (1) eine Verlängerung nach oben umfasst, wobei diese Verlängerung über dem Scheitel des oberen Teils (2) der Einrichtung hinaus verläuft, wobei diese Verlängerung mit Hilfe eines Handhammers oder eines pneumatischen, elektromechanischen oder hydraulischen Hammers geschlagen werden kann.

8. Einrichtung nach Anspruch 7, **dadurch gekennzeichnet, dass** die Verlängerung nicht ein einziges Stück mit dem Hauptdorn (1) bildet, sondern aus einem Schlagschieber gebildet ist, der an einem seiner Enden mit dem Hauptdorn (1) in Kontakt steht, und sein anderes Ende über den Scheitel des oberen Teils (2) der Einrichtung hinaus verläuft, wobei dieser Schlagschieber mit Hilfe eines Handhammers oder eines pneumatischen, elektromechanischen oder hydraulischen Hammers geschlagen werden kann.

9. Einrichtung nach Anspruch 2, **dadurch gekennzeichnet, dass** der Hauptdorn (1) eine Verlängerung nach oben umfasst, wobei diese Verlängerung über dem Scheitel des oberen Teils (2) der Einrichtung verläuft, wobei diese Verlängerung mit Hilfe eines Handhammers oder eines pneumatischen, elektromechanischen oder hydraulischen Hammers geschlagen werden kann, wobei der zusätzliche Dorn (4) auch eine Verlängerung umfasst, die über den Scheitel des oberen Teils (2) der Einrichtung verläuft, die auch, gleichzeitig mit dem Hauptdorn (1), geschlagen werden kann, nachdem dieser die Klammer (7) eingeschlagen hat, und dass sich aus diesem Grund die Scheitel der zwei Dorne (1) und (4) nun auf dem gleichen Niveau befinden und aus diesem Grund zusammen durch einen Handhammer oder einen pneumatischen, elektromechanischen oder hydraulischen Hammer geschlagen werden können.

10. Einrichtung nach Anspruch 9, **dadurch gekennzeichnet, dass** die Verlängerung des Hauptdorns, die über den Scheitel des oberen Teils (2) der Einrichtung hinaus verläuft, nicht ein einziges Stück mit dem Hauptdorn (1) bildet, sondern aus einem Schieber besteht, wobei der Schieber ausgelegt ist, um den Hauptdorn (1), dann gleichzeitig den Hauptdorn (1) und den zusätzlichen Dorn (4) zu schlagen, wenn er selbst mit Hilfe eines Handhammers oder eines pneumatischen, elektromechanischen oder hydraulischen Hammers an seinem Ende geschlagen wird, das über den oberen Teil (2) der Einrichtung hinausragt.

## Claims

1. Equipment for fastening joining clips to the ends of a conveyor belt of the type comprising an upper plate (5') and a lower plate (5"') connected by knuckles (5"), able to be placed on the ends of a conveyor belt (BT), in two respective series, with the knuckles (5") of the two respectively opposite series able to be connected, after having been mutually nested, by a connecting and articulation rod, in the manner of a hinge, said equipment comprising an upper movable portion (2) and a stationary lower portion (3), positioned and centred in relation to one another by positioning and centring elements, with the upper portion (2) able to slide vertically by approaching or by moving away from the lower portion (3), the lower portion (3) comprising an anvil (3') and means of bracing intended for the lower plate (5"') of a clip (5) presented between the upper portion (2) and the lower portion (3) of the equipment, with the upper portion (2) of the equipment comprising a vertical channel (2') able to receive a main punch (1) substantially centred above the anvil (3') and able to be struck by beating, by means of a manual hammer, or of a device of the air, electromechanical, or hydraulic hammer type, mounted in the upper portion (2) of the equipment, in order to sink clamps (7) engaged more preferably with flanging in holes made in the upper plate (5') of a joining clip (5) arranged astride the edge of an end of a conveyor belt (BT) placed between the upper portion (2) of the equipment and the lower portion (3) of the equipment, then in the material of the end of the conveyor belt, with its tips then being folded back either under the lower plate (5"') of the clip (5) by encountering hollows of suitable shape made in the anvil (3') of the lower portion (3) of the equipment or under a jumper or jumpers, made in the lower plate (5"') of the clip (5), with the upper face of the lower plate (5''') of the clip playing the role of an anvil, with the lower face of the lower plate (5"') of the clip bearing against the anvil of the lower portion of the equipment which in this latter case is smooth,
the upper portion (2) of the equipment comprising a second vertical channel (2"') wherein is mounted a complementary punch (4) in such a way as to be able to slide in this channel (2"') parallel to the main punch (1) by being juxtaposed with this main punch (1),
**characterised in that** the complementary punch (4) is arranged in such a way that its lower end is located precisely above the portion of the upper plate (5') of the clip (5) located between the knuckles (5") and the branch of the clamp (7) that is the closest to the knuckles (5"), with the arrangement of the two punches being such that the complementary punch (4) does not start to be struck, at the same time as the main punch (1) continues to be struck, until after the main punch (1) has sunk the clamp and applied against the upper face of the end of the conveyor belt (BT) the portion of the upper plate (5') of the clip (5) located under the clamp (7).

2. Equipment according to claim 1, **characterised in that** the main punch (1) comprises a head (1') which forms a widened portion (1'a) on the side opposite the one where the complementary punch (4) is located, said widened portion (1'a) able to be displaced in a widened portion (2") of the channel (2') during the displacement of the main punch (1).

3. Equipment according to claim 2, **characterised in that** the main punch (1) comprises a head (1') which forms a widened portion (1'b) on the side where the complementary punch (4) is located, said widened portion (1'b) being located above the top of the complementary punch (4), at a distance that varies according to the respective displacements of the two punches (1) and (4) in their respective channels (2') and (2''').

4. Equipment according to claim 2 or 3, **characterised in that** the complementary punch (4) comprises a top shoulder (4') and a bottom shoulder (4'') on its side arranged opposite the main punch (1) and that a prominence (2"") protrudes in the vertical guiding channel (2"') of the complementary punch (4), in the space between the two shoulders (4') and (4") of the complementary punch (4), with the dimension of said prominence (2''''), in the vertical direction, being less than that of said space, also in the vertical direction, of said space, in such a way that the top shoulder (4') is bearing on the prominence (2"') when the complementary punch (4) is in low position, position wherein a vertical guiding groove (4"') arranged in the complementary punch (4), in the side of the latter which is directed towards the main punch (1), can receive the upper portion of a clamp (7) engaged with flanging in the holes of the upper plate (5') of a clip (5) presented in the equipment, astride the edge of an end of a conveyor belt (BT), with its upper plate (5') being, at this stage, slanted in relation to the upper face of the conveyor belt (BT).

5. Equipment according to claim 3, **characterised in that** an air, electromechanical, or hydraulic hammer, is mounted in the upper portion (2) of the equipment, in such a way that its striking head (8) can strike, by beating it, the main punch (1), either directly, or through the intermediary of a striking slide (8') mounted between the striking head (8) and the main punch (1).

6. Equipment according to claim 2, **characterised in that** an air, electromechanical or hydraulic hammer, is mounted in the upper portion (2) of the equipment in such a way that its striking head (8) can strike, by beating them, the main punch (1) and the complementary punch (4), either directly, or through the intermediary of a striking slide (8') mounted between the striking head (8) and the punches (1) and (4).

7. Equipment according to claim 3, **characterised in that** the main punch (1) comprises an extension upwards, with this extension extending beyond the top of the upper portion (2) of the equipment, with this extension able to be struck by means of a manual hammer, or of an air, electromechanical or hydraulic hammer.

8. Equipment according to claim 7, **characterised in that** the extension does not form a single piece with the main punch (1) but is comprised of a striking slide which is in contact, at one of its ends, with the main punch (1) and its other end extending beyond the top of the upper portion (2) of the equipment, with this striking slide able to be struck by means of a manual hammer, or of an air, electromechanical or hydraulic hammer.

9. Equipment according to claim 2, **characterised in that** the main punch (1) comprises an extension upwards, with this extension extending beyond the top of the upper portion (2) of the equipment, with this extension able to be struck by means of a manual hammer, or of an air, electromechanical or hydraulic hammer, with the complementary punch (4) also comprising an extension extending beyond the top of the upper portion (2) of the equipment also able to be struck, at the same time as the main punch (1) after the latter has sunk the clamp (7) and that therefore the tops of the two punches (1) and (4) are then located at the same level and therefore able to be struck together by a manual hammer, or of an air, electromechanical or hydraulic hammer.

10. Equipment according to claim 9, **characterised in that** the extension of the main punch extending beyond the top of the upper portion (2) of the equipment does not form a single piece with the main punch (1) but consists of a slide, said slide being intended to strike the main punch (1) then simultaneously the main punch (1) and the complementary punch (4) when it is itself struck by means of a manual hammer, or of an air, electromechanical or hydraulic hammer at its end that extends beyond the upper portion (2) of the equipment.
